# EUROPEAN PATENT APPLICATION

(11) **EP 1 505 775 A2**
(43) Date of publication of application: **09.02.2005**
(21) Application number: 04254644.0
(22) Date of filing: 02.08.2004
(51) Int. Cl.: H04L 12/28

(54) **Wireless packet communication apparatus and method using packet concatenation**

(30) Priority: 07.08.2003 JP 2003206607
(71) Applicant: NTT DoCoMo, Inc., Tokyo 100-6150 (JP)
(72) Inventor: Aoki, Hidenori, Intel. Prop. Dpt. NTT DoCoMo, Inc., Tokyo 100-6150 (JP); Hagiwara, Junichiro, I. Prop. Dpt. NTT DoCoMo Inc., Tokyo 100-6150 (JP); Umeda, Narumi, Intel. Prop. Dpt. NTT DoCoMo, Inc., Tokyo 100-6150 (JP)
(74) Representative: Maury, Richard Philip

(57) **Abstract**

A wireless packet communications apparatus and method are disclosed that enable enhancing of the overall system capacity by reducing, at the time of transmitting a multiple number of packets, redundant waiting time periods and appending of redundant information items.

## Description

### BACKGROUND OF THE INVENTION

### 1. Field of the Invention

The present invention generally relates to a wireless packet communication apparatus and method, and particularly relates to a wireless packet communication apparatus and method in a wireless packet communication system used in wireless LAN (Local Area Network) and cellular communications, etc., in which a multiple number of packets are concatenated so as to be communicated.

### 2. Description of the Related Art

There exists IEEE 802.11 as a representative standard of the wireless LAN method. In the IEEE 802.11, as a multiple number of wireless terminals share and use the same frequency resources, CSMA/CA (Carrier Sense Multiple Access with Collision Avoidance: an access-control method in MAC (Media Access Control) layer of the wireless LAN) is used as a wireless-access control method.

CSMA/CA, in a similar manner to wired Ethernet (a registered trademark), allows transmission when a circuit is free. Specifically, whether a frequency band to be used is not being used by another terminal is determined, and, if it is not being used, a packet is transmitted after a further random waiting time period. Hereby, collision of the packets is avoided so that the sharing of the same wireless frequency band by the multiple number of terminals is enabled.

Moreover, as the CSMA/CA as described above is a method of communicating packets, to one packet is appended a synchronization signal for enabling a receiver to read at a correct timing (a wireless preamble), a wireless header which includes such information items as those required for demodulation and error detection of the packet, and, one MAC header, which is a header of the data link layer, for each packet.

As these redundant waiting time periods and information items which would be needed at the time of transmitting the packets are evenly appended to all the packets, when the payload length is short, the redundant waiting time periods and information items become predominant so that the throughput extremely degrades. Moreover, for a shortened transmission time of the payload with an increased wireless-transmission rate, also in a similar manner, the redundant waiting time periods and information items become predominant so that an upper limit value of the throughput characteristic ends up being reduced to a lower value.

Thus, as a method of resolving such problems, numerous proposals have been made for a method of concatenating multiple packets into one packet.

For instance, as for a method indicated in Non-Patent Document 1, a method of eliminating a random waiting time, in CSMA/CA, required in between a predetermined number of packets consecutively transmitted to a specified one terminal is being proposed.

As for a method indicated in Non-Patent Document 2, a method of implementing concatenation of a predetermined number of packets to be consecutively transmitted by defining a new frame named Container in the MAC layer is being proposed.

In Non-Patent Document 3, a method of transmission by concatenating in the MAC layer a predetermined number of packets to be consecutively transmitted is being proposed.

### Non-Patent Document 1

Jean Tourrihes, "Packet Frame Grouping : Improving IP multimedia performance over CSMA/CA", HP Labs Technical Reports, HPL-97-132, Oct. 1997

### Non-Patent Document 2

"IEEE Std 802.11e/D1 (Draft Supplement to IEEE Std 802.11, 1999 Edition)", Mar 2001

### Non-Patent Document 3

M. Gruteser, A. Jain, J. Deng, F. Zhao, D. Grunwald, "Exploiting Physical Layer Power Control Mechanisms in IEEE 802.11b Network Interface", University of Colorado at Boulder Technical Report, CU-CS 1 524-01, Dec 2001

However, with the related-art methods, when short data items are generated sporadically to a specific terminal such as VoIP (Voice Over IP) in which speech data are transmitted in packets, a long waiting time may be required in order to concatenate multiple packets. In other words, delay time introduced hereby leads to a problem of causing degradation to the quality of service of the VoIP requiring real-time characteristics.

For instance, when using a G 729 codec as a method of speech compression, 60 bytes of IP (Internet Protocol) packets are produced every 20 ms. When attempting to stack up to 1500 bytes, which is the maximum value for the payload length of the Ethernet (a registered trademark) packet, 500 ms (20 ms x 25) of delay is introduced.

As a method of concatenating packets addressed to one terminal is adopted in all of the above Non-patent Documents 1, 2, and 3, the same problem arises.

### SUMMARY OF THE INVENTION

It is a general object of the present invention to provide a wireless packet communication apparatus and method that substantially obviate one or more problems caused by the limitations and disadvantages of the related art.

In light of the problems as described above, it is a more particular object of the present invention to provide a wireless packet communication apparatus and method that enable enhancing of the overall system capacity by reducing, at the time of transmitting a multiple number of packets, redundant waiting time periods and redundant appended information items.

According to the invention, a wireless packet communication apparatus in a wireless packet communication system in which multiple wireless packet communication apparatuses share a wireless channel for packet communication includes a detection unit configured to detect within a transmission buffer at least two packets to be concatenated having different destination addresses, and a concatenated-packet transmission control unit configured to concatenate the detected packets so as to multicast-transmit the concatenated packet to the corresponding destination addresses of the detected packets.

The wireless packet communication apparatus in an embodiment of the invention enables enhancing of the overall system capacity by reducing, at the time of transmitting the multiple number of packets, the redundant waiting time periods and the appending of the redundant information items.

According to the invention, a method of wireless packet communication in a wireless packet communication system in which multiple wireless packet communication apparatuses share a wireless channel for packet communication includes the steps of detecting within a transmission buffer at least two packets to be concatenated having different destination addresses, and concatenating the detected packets so as to multicast-transmit the concatenated packet to the destination addresses of the detected packets.

The method of wireless packet communication in an embodiment of the invention enables enhancing of the overall system capacity by reducing, at the time of transmitting the multiple packets, the redundant waiting time periods and the appending of the redundant information items.

Other objects and further features of the present invention will be apparent from the following detailed description when read in conjunction with the accompanying drawings.

### BRIEF DESCRIPTION OF THE DRAWINGS

FIG. 1 is a block diagram illustrating a configuration of a wireless packet communication apparatus (transmitting) according to an embodiment of the present invention;
FIG. 2 is a block diagram illustrating a configuration of a wireless packet communication apparatus (receiving) according to the embodiment of the present invention;
FIG. 3 is a schematic diagram describing operating principles of the present invention;
FIG. 4 is a data diagram for describing a series of operations from a communications terminal concatenating a multiple number of packets to transmitting;
FIG. 5 is a flowchart illustrating an operating procedure at the communications terminal in transmitting a concatenated packet;
FIG. 6 is a schematic diagram for describing a method of switching among multiple packet-concatenating units;
FIG. 7 is a flowchart illustrating a procedure for choosing a transmission queue;
FIG. 8 is a table illustrating one example of information being stored in a wireless transmission rate management database;
FIG. 9 is a schematic diagram illustrating an example of a method of checking whether an implementation of a concatenated-packet function exists (part I);
FIG. 10 is a schematic diagram illustrating another example of the method for checking whether an implementation of the concatenated-packet function exists (part II);
FIG. 11 is a schematic diagram illustrating an example of an operation requesting use of the concatenated-packet function from a transmitting communications terminal;
FIG. 12 is a schematic diagram illustrating an example of a packet-transmission operation of an existing system;
FIG. 13 is a schematic diagram for describing a method of controlling an Ack-packet transmission at each receiving communications terminal; and
FIG. 14 is a data diagram describing an encrypted transmission of a concatenated packet.

### DETAILED DESCRIPTION OF PREFERRED EMBODIMENT

In the following, an embodiment of the present invention is described with reference to the accompanying drawings.

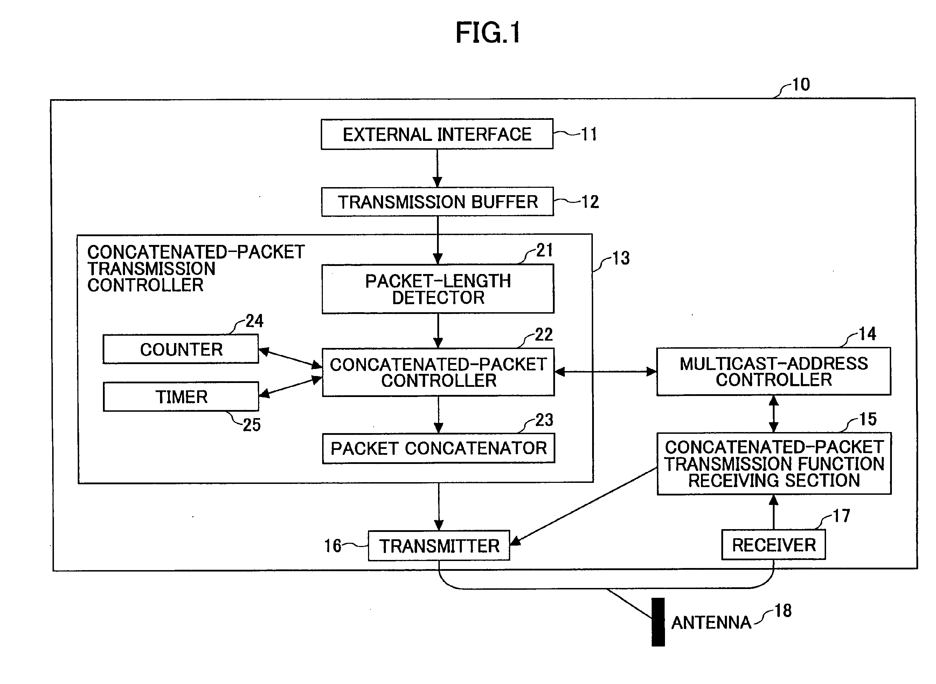

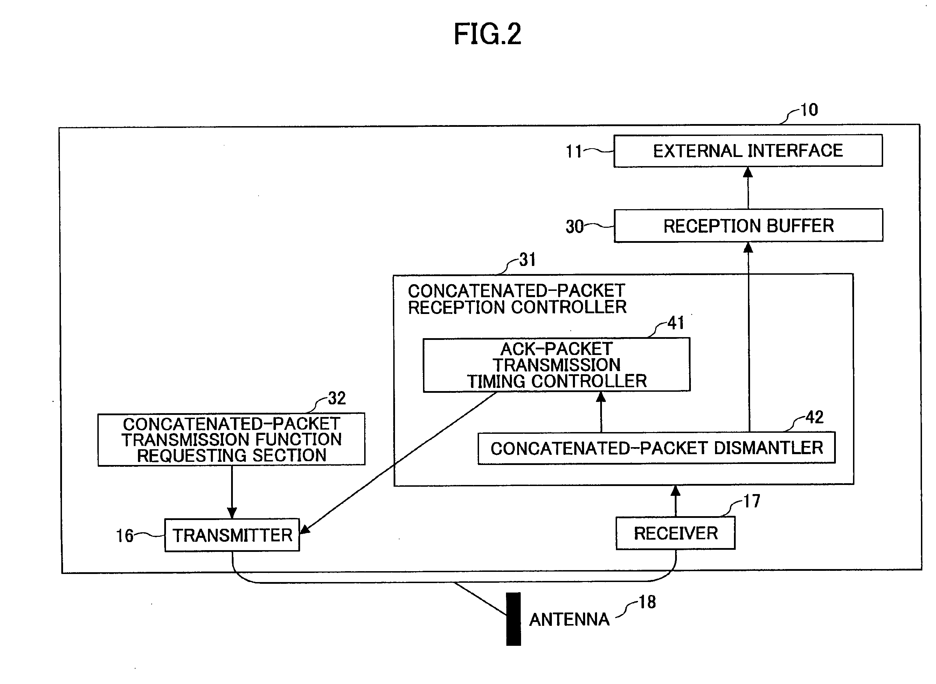

FIGS. 1 and 2 are block diagrams illustrating configurations of a wireless packet communication apparatus, with FIG. 1 illustrating a configuration of the transmitting apparatus and FIG. 2 illustrating a configuration of the receiving apparatus. First, the configuration of the transmitting apparatus is described and then, the configuration of the receiving apparatus is described.

### (A description of the transmitting apparatus)

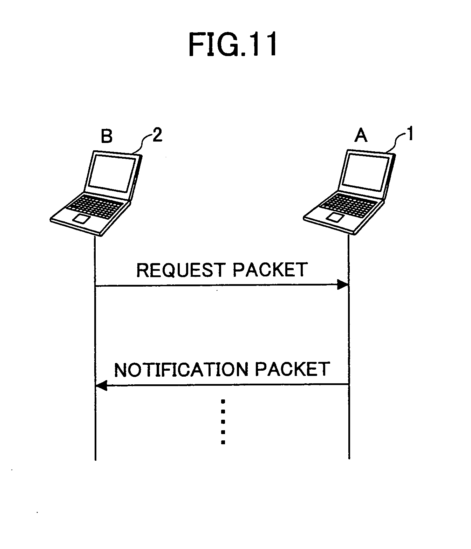

In FIG. 1, 11 is an external interface into which a packet to be transmitted is input, 12 is a transmission buffer (e.g. a memory) for retaining a packet awaiting transmission, 13 is a concatenated-packet transmission controller for detecting a packet to be concatenated, and encapsulating it with a packet addressed to a multicast address for transmitting, 14 is a multicast-address controller for controlling a multicast address, to be used in packet concatenation, so that a multicast address is assigned to each terminal, 15 is a concatenated-packet transmission function receiving section for receiving a request for the packet-concatenation function from the receiving wireless packet communication apparatus, 16 is a transmitter for converting into a radio-frequency signal and transmitting a packet, 17 is a receiver for receiving a packet transmitted from another wireless packet communication apparatus as a communications counterpart, and 18 is an antenna for connecting to the transmitter 16 and the receiver 17.

The concatenated-packet transmission controller 13 as described above is configured by a packet-length detector 21, a concatenated-packet controller 22, a packet concatenator 23, a counter 24, and a timer 25. The packet-length detector 21 detects the packet length of a packet to be transmitted, the counter 24 counts the number of bytes and the number of packets of the packets to be concatenated, the timer 25 times packet waiting time required for the packet concatenation process, the concatenated-packet controller 22 is responsible for the process of coordinating with the packet-length detector 21, the counter 24, the timer 25, and the multicast-address controller 14, and the packet concatenator 23 concatenates the packets to be concatenated, encapsulates them with the packet addressed to the multicast address and outputs the concatenated packets to the transmitter 16.

Moreover, the multicast-address controller 14 as described above, has a function of assigning a multicast address to the packet transmission destination address, when there is an inquiry from the concatenated-packet transmission controller 13, and a function of responding with a multicast address to be assigned to the wireless packet communication apparatus, when there is a request from the concatenated-packet transmission function receiving section 15.

### (The receiving apparatus)

In FIG. 2, an external interface 11, a transmitter 16, a receiver 17, and an antenna 18 have the same functions as the external interface 11, the transmitter 16, the receiver 17, and the antenna 18 as illustrated for the transmitting apparatus. The corresponding descriptions are omitted so that herein only the difference from the transmitter as described above is described.

In FIG. 2, 30 is a reception buffer for temporarily accumulating the received concatenated packet, 31 is a concatenated-packet reception controller for receiving and dismantling the concatenated packet, and transmitting an Ack at an appropriate timing, and 32 is a concatenated-packet transmission function requesting section for requesting use of the concatenated-packet transmission function of the transmitting wireless packet communication apparatus and obtaining a multicast address.

Moreover, the concatenated-packet reception controller 31 as described above is configured by a Ack-packet transmission timing controller 41 and a concatenated-packet dismantler 42. The concatenated-packet dismantler 42 has a function of fetching a packet addressed to own station from the concatenated packet and an Ack packet transmission timing controller 41 has a function of detecting transmission timing of an Ack packet from the position within the concatenated packet of a packet addressed to own station and causing the Ack to be transmitted from the transmitter 16.

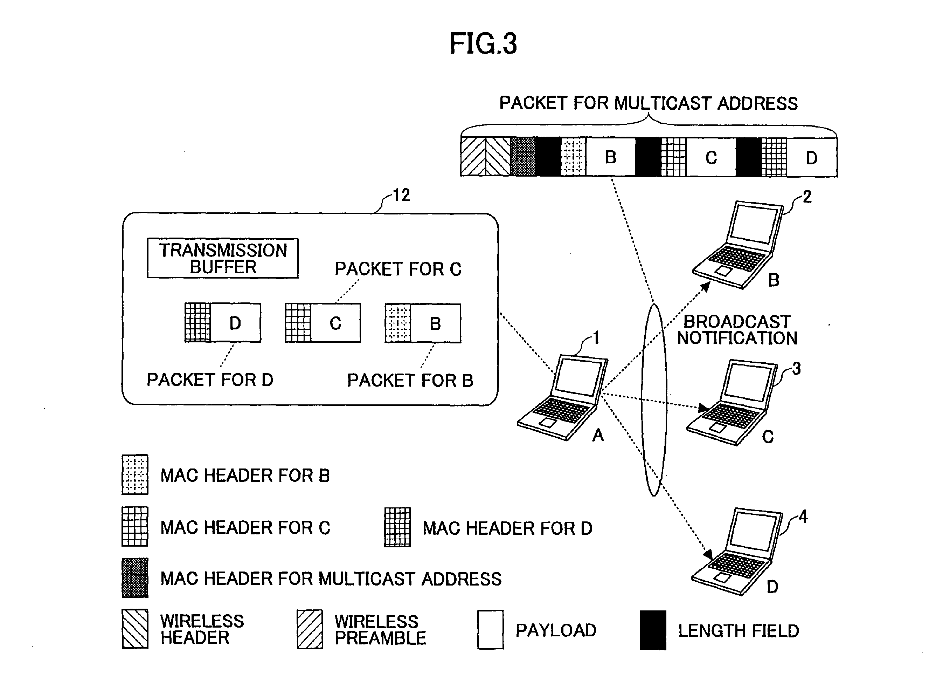

Next, operating principles of the present embodiment are described with reference to FIG. 3. Below, descriptions are provided with the wireless communication packet apparatus in the present invention abbreviated as a communications terminal, a transmitting communications terminal abbreviated as a communications terminal A1, and a receiving communications terminals receiving broadcast notification abbreviated as communications terminals B2, C3, and D4.

In FIG. 3, it is assumed that an individual packet addressed to the communications terminal B2, an individual packet addressed to the communications terminal C3, and an individual packet addressed to the communications terminal D4, in other words, individual packets with differing destinations, are accumulated. The respective individual packets as described above are configured from a MAC header indicating an individual destination address and a payload in a data portion.

The communications terminal A1 concatenates individual packets to be concatenated (assumed herein to be individual packets addressed to communications terminals B2 through D4) after determining whether a packet accumulated within the transmission buffer is a packet to be concatenated. At this time, when the MAC header does not contain an information item regarding the packet length of the individual packet, an information item indicating the packet length is inserted at the beginning of the individual packet. A method of determining the packet to be concatenated is described below.

The communications terminal A1, after concatenating the individual packets addressed to the communications terminals B2, C3, and D4, appends a wireless preamble, a wireless header, and a MAC header indicating a multicast address to the concatenated packet so as to encapsulate it, and to provide multicast-transmitting (broadcast-notify) for addressing to a multicast address designated as a destination MAC address. Herein, it is assumed that the communications terminals B2 through D4 are participating in the same multicast group.

As indicated in FIG. 3, while the present embodiment illustrates a method of operation in a wireless ad-hoc network with all communications terminals having equal functions, the present invention is not limited to such mode. For instance, an application to a mobile communications system as configured from a base station and a mobile station is possible.

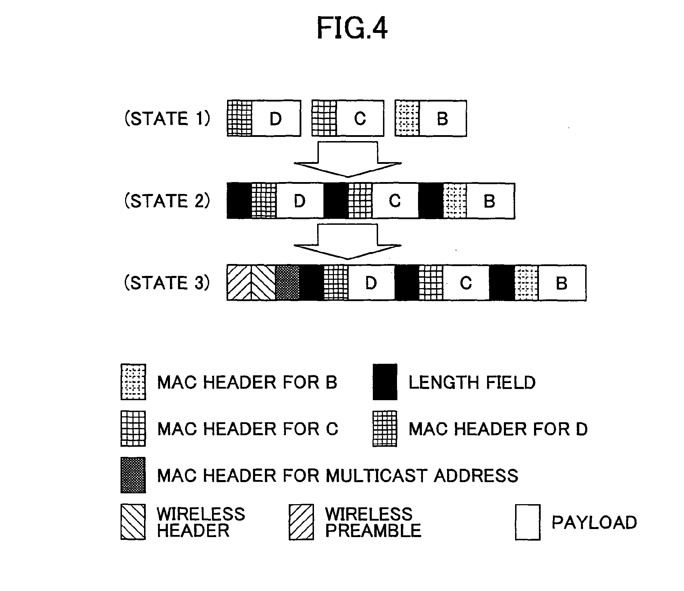

Next, using FIG. 4, a description is provided for a series of operations from a communications terminal concatenating a multiple number of packets to transmitting. FIG. 4 illustrates state transitions in the process of the communications terminal A1 concatenating packets addressed to the communications terminals B2, C3, and D4.

### (State 1)

In a first state, packets awaiting transmission, each one of which is addressed to one of the communications terminals B2, C2, and D4, exist in the transmission buffer 12 of the communications terminal A1. At the head end of each packet, the MAC header including the information item of the corresponding destination addresses of the communications terminals B2, C3, D4, which are transmission destinations of the respective packets, is appended.

### (State 2)

In state 2, the communications terminal A1 concatenates these three packets within the transmission buffer and appends the information item indicating the packet length (length field) to the head end of each packet.

### (State 3)

In state 3, the communications terminal A1 appends the MAC header including the destination information of the multicast address at the head end of the concatenated packet prepared as described above. Last, the wireless header and the wireless preamble are appended at the head end of the packet and the packet is transmitted to the multicast address.

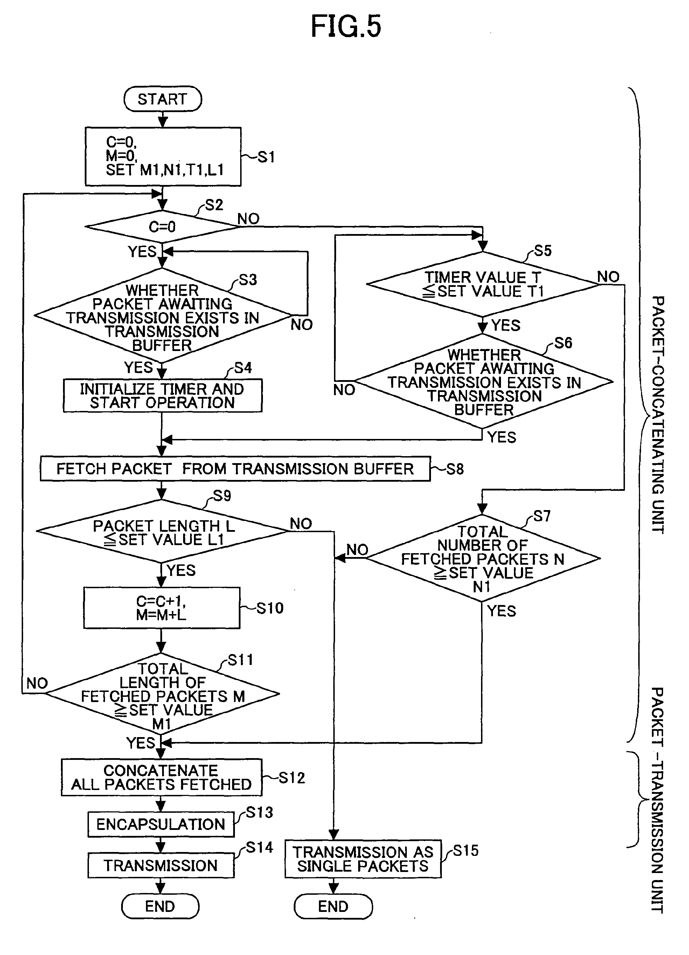

Next, an operation at the communications terminal A1 concerned with the transmission of the concatenated packet is described in detail with reference to a flowchart in FIG. 5.

In FIG. 5, first, when the process of transmitting the concatenated packet is started, the concatenated-packet controller 22 of the concatenated-packet transmission controller initializes a counter C (corresponding to the function of the counter 24), which counts the number of packets to be concatenated that are fetched from the transmission buffer, to zero (C=0) and the total packet length of packets fetched M to zero (M=0). Moreover, N1 as the minimum value of the total number of packets concatenated N, T1 as the maximum value of the packet waiting time T, L1 as the maximum value of the packet length of the packets to be concatenated L, and M1 as the maximum value of the total packet length of packets fetched M are set (Step S1).

In Step S2, the concatenated-packet controller 22 determines whether the value of the counter C which counts the number of packets to be concatenated is zero, and if it is affirmative (YES in Step S2), the procedure proceeds to Step 3 in which whether a packet awaiting transmission exists within the transmission buffer 12 is determined. If this determination is affirmative (YES in Step S3), the procedure proceeds to Step S4 in which an operation for initializing a timer (corresponding to the function of the timer 25) and transmitting a concatenated packet is started.

On the other hand, when it is determined that the value of the counter C is not zero as the packets to be concatenated have been fetched previously from the transmission buffer, the concatenated-packet controller 22 proceeds to Step S5 in which the elapsed time of the packets being accumulated within the transmission buffer 12 is determined. Specifically, it is determined whether the timer value T is less than or equal to the set value T1. If it is determined that the timer value T exceeds the set value T1 (NO in Step S5), then it is determined whether the total number of packets fetched N from the transmission buffer is greater than or equal to the set value N1 (Step S7).

The concatenated-packet controller 22, when determining that the total number of packets N is not greater than or equal to the set value N1 in the determination in Step S7 (NO in Step 7), bypasses the process at the packet concatenator 23, and, without concatenating the packets accumulated within the transmission buffer 12, transmits each packet as a single packet (Step S15).

On the other hand, if it is determined that the total number of packets N is greater than or equal to the set value N1 in the determination in Step S7 (YES in Step S7), the packet concatenator 23 fetches the packets accumulated within the transmission buffer 12 so as to concatenate all of the packets (Step S12), encapsulates in the concatenated packet a packet addressed to the multicast address (Step S13) and transmits the concatenated packet (Step S14).

Returning to Step S5, the concatenated-packet controller 22, when determining in Step 5 that the timer value T is not greater than or equal to the set value T1 (YES in Step S5), determines whether a packet awaiting transmission exists within the transmission buffer 12 (Step S6). In this determination, when it is determined that there is not a packet awaiting transmission within the transmission buffer 12 (NO in Step S6), these series of operations are repeated, whereas when it is determined that there is a packet awaiting transmission (YES in Step S6), the procedure proceeds to Step S8.

The concatenated-packet controller 22 fetches the packet or packets awaiting transmission accumulated within the transmission buffer 12 (Step S8) so as to determine whether the packet length L of that fetched packet is less than or equal to the predetermined set value L1 (Step S9). As described above, with the information item indicating the packet length having been inserted at the head end of the packet, the concatenated-packet controller 22 reads out the information indicating the packet length so as to compare it with the set value L1.

The concatenated-packet controller 22, in the determination in Step S9, when determining that the packet length L exceeds the set value L1 (NO in Step S9), without concatenating the packets fetched from the transmission buffer 12, transmit the packets as single packets (Step S15).

On the other hand, when determining that the packet length L as described above does not exceed the set value L1, the concatenated-packet controller 22 proceeds to Step S10 in which one is added to the counter C of the number of the packets fetched from the transmission buffer and the packet length L is added to the total packet length M of the fetched packets.

In Step S11, it is determined whether the total length M of packets which have been fetched thus far is greater than or equal to the set value M1. In this determination, when it is affirmative (YES in Step S11), the packet concatenator 23 concatenates all of the fetched packets (Step S12), encapsulates them with the packet addressed to the multicast address (Step S13) and transmits the encapsulated packet (Step S14).

On the other hand, in the determination in Step S11, if it is negative (NO in Step S11), the procedure returns to Step S2 so that the process of the loop is performed.

As described above, according to the communications terminals in the present embodiment, reducing headers to be appended at the head end of individual packets and waiting time period before packet transmission is enabled by detecting and concatenating short packets having different destinations so as to encapsulate the concatenated packet with a packet addressed for multicast and to transmit the encapsulated packet. Therefore, obtaining an effect of an improved throughput and an enhanced system capacity even in an application requiring real-time processing is enabled. Moreover, as the number of packets transmitted decreases, reducing of the power consumption of the communications terminals is enabled.

With the communications terminals according to the present embodiment, when the wireless transmission rates of the packets differ, the packets are not transmitted individually. Therefore, the communications terminals according to the present embodiment have a function in which an independent queue is provided within the transmission buffer per wireless transmission rate so that packets are concatenated in parallel for different wireless transmission rates.

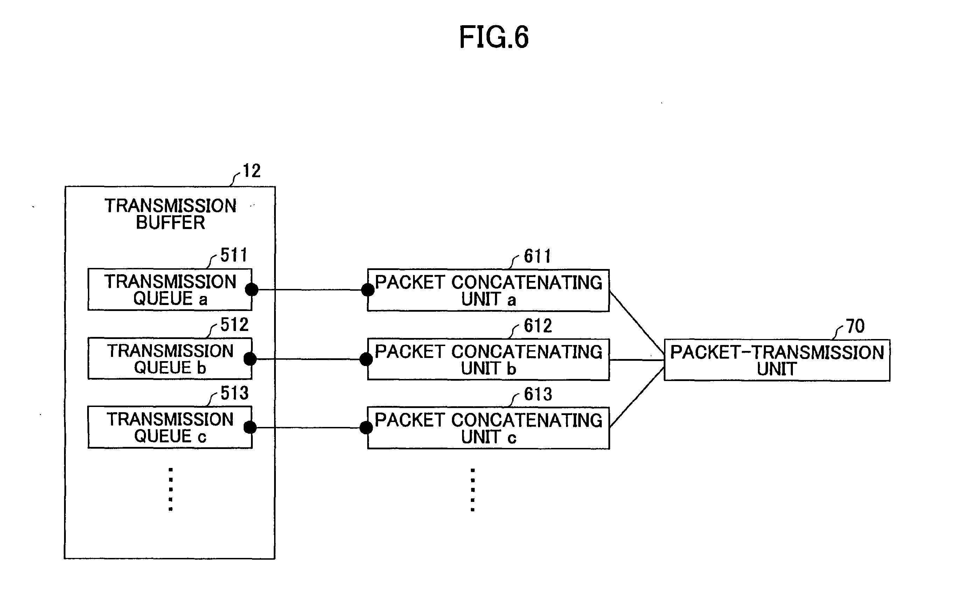

Below, an operation of a communications terminal having such function is described with reference to FIGS. 6 through 8. FIG. 6 is a diagram for describing a method of switching among multiple packet-concatenating units at the communications terminal.

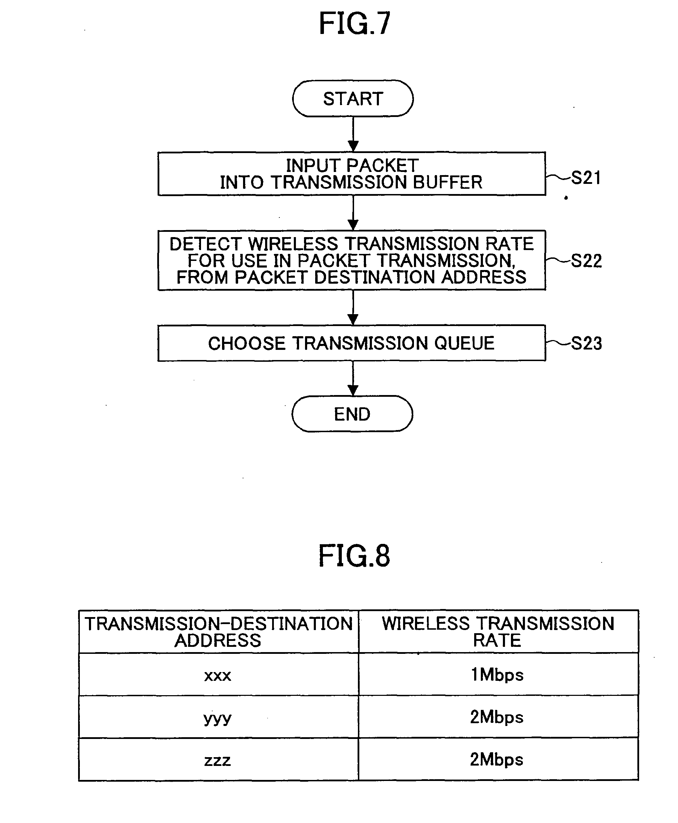

The communications terminal according to the present embodiment provides for a different queue (transmission queue) for each wireless transmission rate. For example, transmission queues are provided such that a transmission queue a51₁ is for the wireless transmission rate a, a transmission queue b51₂ is for the wireless transmission rate b, a transmission queue c51₃ is for the wireless transmission rate c, etc. Next, the method of choosing one of such transmission queues is described. FIG. 7 is a flowchart illustrating a procedure for choosing a transmission queue.

In FIG. 7, when a packet is input into a transmission buffer (Step S21), the wireless transmission rate to be used for packet transmission is detected (Step S22). For example, the wireless transmission rate for each packet is detected by reading out information items of the wireless transmission rate corresponding to the transmission-destination address stored in a database as shown in FIG. 8. In Step S23, based on the detected wireless transmission rate, a transmission queue (corresponding to the respective transmission queues 51₁, 51₂, 51₃ illustrated in FIG. 6) is chosen so as to store a packet.

Returning to FIG. 6, packets output from the transmission queues 51₁, 51₂, 51₃ are input into packet-concatenating units a61₁, b61₂, c61₃, respectively, so as to perform a packet-concatenating process per wireless transmission rate. After the packet-concatenating process by each packet-concatenating unit a61₁, b61₂, c61₃ is completed, transmission is performed using a common packet-transmission unit 70.

Thus, according to the communications terminal in the present embodiment, obtaining an improved throughput and an enhanced system capacity is enabled even in an application with different wireless transmission rates by switching among parallel packet-concatenating units depending on the wireless transmission rates used.

It is also possible to assign multiple multicast addresses to one communications terminal requesting packet concatenation. Moreover, it is possible for the communications terminal to receive a packet addressed to multiple multicast addresses. In other words, even when the wireless transmission rate of the packet transmitted has changed, an operation of concatenating packets having different wireless transmission rates can be executed by changing the multicast address to be used for encapsulation (for example, changing the packet-concatenating unit in FIG. 6, or changing the transmission queue).

As described thus far, the communications terminal in the present embodiment has a function of concatenating short packets having different destinations. For both a transmitting communications terminal and a receiving communications terminal to utilize this packet-concatenating function, the receiving communications terminal receiving a concatenated packet needs to be aware of whether the transmitting communications terminal provides for the packet-concatenating function.

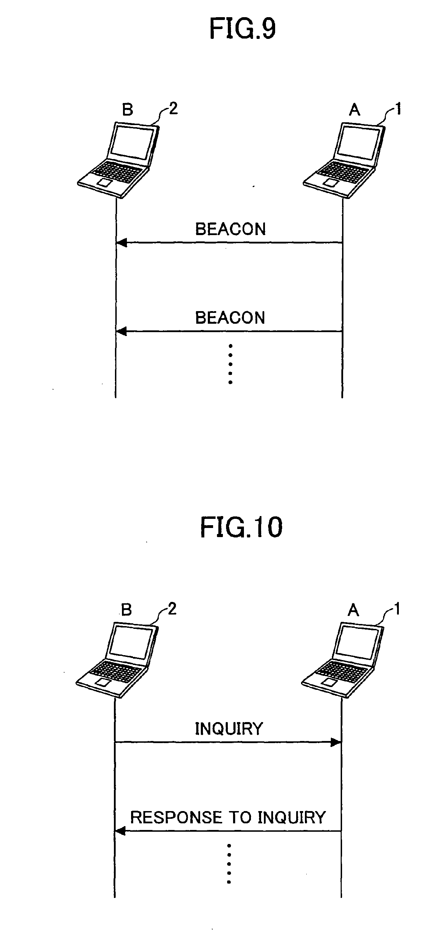

Therefore, the communications terminal in the present embodiment has a function of checking whether there is a packet-concatenating function. As a method of implementing this function, for example, as illustrated in FIG. 9, there is a method in which the communications terminal A1 appends to a beacon packet being sent periodically to the receiving communications terminal B (herein, for brevity of description, only the communications terminal B2 is illustrated and the other communications terminals C3 and D4 are omitted) information items indicating whether there exists an implementation of the concatenated-packet function, and a method in which the communications terminal B2 makes an inquiry to the communications terminal A1 on whether there is an implementation of the concatenated-packet function.

When whether an implementation of the concatenated-packet function exists is determined by either of the methods as described above, the receiving communications terminal needs to send a request for use of this concatenated-packet function to the transmitting communications terminal. As a example of implementing this operation, as illustrated in FIG. 11, the receiving communications terminal B2 transmits to the transmitting communications terminal A1 a request packet. The communications terminal A1 receiving this request packet transmits to the communications terminal B2 information items of the multicast address to be used for transmission, and permission to use the concatenated-packet function and the concatenated packet.

With the function as described above of determining whether there exists an implementation of the concatenated-packet function at both the transmitting and the receiving communications terminals, upon completion of determining that there does exist an implementation of the concatenated-packet function, a multiple number of packets addressed to the receiving communications terminal are concatenated at the communications terminal A1 so as to be transmitted as one concatenated packet.

However, it is not necessarily the case that the transmitted packet correctly arrives at the receiving communications terminal, due to multi-path fading which arises due to transmitted radio waves travelling via multiple number propagation paths, and due to collision of packets. Therefore, typically, an improved reliability of packet delivery is realized by the receiving communications terminal having to return to the transmitter after receiving a packet an "Ack packet" as an acknowledgment of arrival. However, as the communications terminal in the present invention concatenates packets addressed to multiple terminals into one packet so as to be transmitted, a method of controlling Ack packet transmission at each receiving communications terminal is called for. Thus, the communications terminal in the present embodiment has an Ack packet transmission control function at each receiving communications terminal.

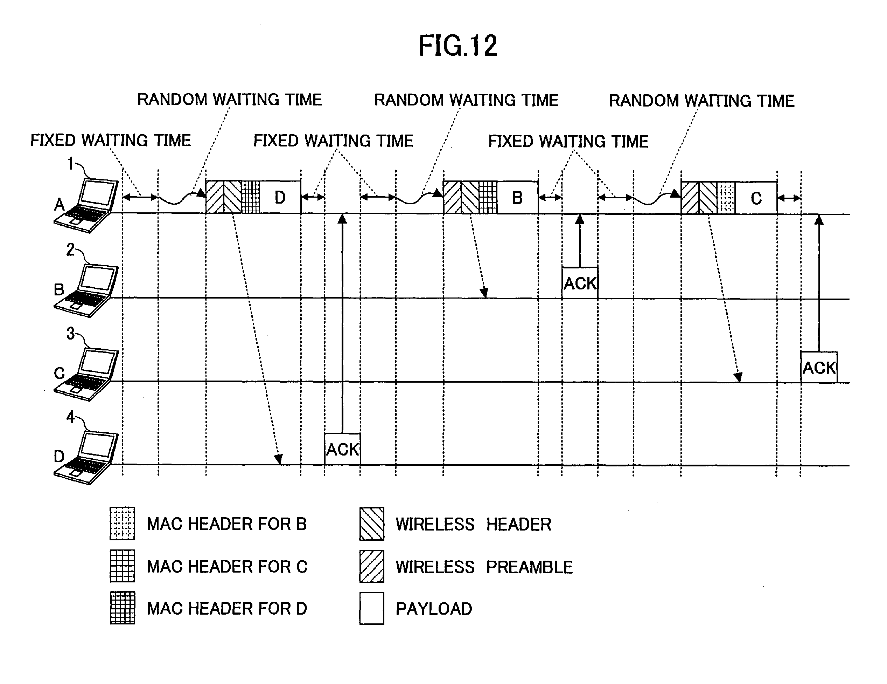

FIG. 12 is a diagram illustrating an example of an operation of packet transmission of an existing (conventional) system. As illustrated in FIG. 12, each packet addressed to communications terminals B2, C3, and D4, after undergoing a fixed waiting time and a random waiting time, is appended with a wireless preamble, a wireless header, and a MAC header so as to be then transmitted. In this case, the communications terminal A1 transmits in the order of the packet addressed to the communications terminal D, then the packet addressed to the communications terminal B, and then the packet addressed to the communications terminal C. The receiving communications terminals B2, C3, and D4 each sends an Ack message as an acknowledgment at the completion of a predetermined amount of waiting time after receiving a packet. The same operation is repeated for transmission of the subsequent packets.

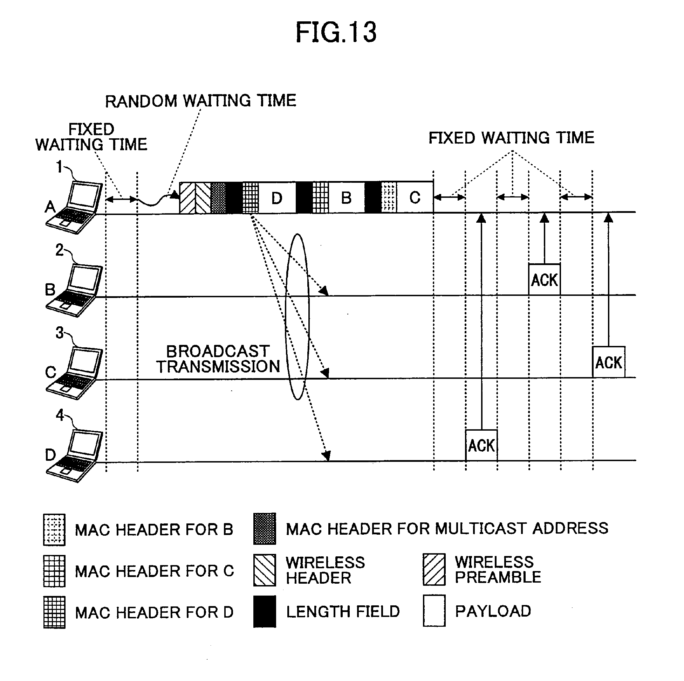

FIG. 13 is a diagram for describing a method of controlling Ack packet transmission at each receiving communications terminal.

As illustrated in FIG. 13, the communications terminals B2, C3, and D4 having received a concatenated packet transmitted from the communications terminal A1 each returns an Ack message in the order in which individual packets are inserted into the concatenated packet. In the case of the present embodiment, the Ack messages are returned in the order of the communications terminal D4, then the communications terminal B2, and then the communications terminal C3. In order to compensate for the time concerned with switching between transmission and reception and for the offset in the transmission timings due to the difference in the lengths of the propagation routes, a predetermined time gap is needed between each Ack.

In the present embodiment, individual packets are inserted into the concatenated packet in the order of packets addressed to communications terminals D4, to communications terminal B2, and to communications terminals C3. This concatenated packet, at the completion of a fixed-length waiting time and a random waiting time, is appended with a wireless preamble, a wireless header, and a MAC header addressed to a multicast address so as to be then transmitted.

After the concatenated packet is received at each of the receiving communications terminals B2, C3, and D4, the communications terminal D4 transmits first an Ack to the communications terminal A1 after the elapse of a fixed waiting time T_{gap}. Herein, assuming the transmission time of the Ack as T_{ack}, as the sequential order of the communications terminal B2 is the second, an Ack is transmitted after the elapse of T_{ack}+2T_{gap} after receiving the concatenated packet. Last, the communications terminal C3 transmits an Ack to the communications terminal A1 after an elapse of 2T_{ack}+3T_{gap} after receiving the concatenated packet.

Thus, in the present embodiment, improving the reliability at the time of transmitting a concatenated packet is enabled by controlling transmission of an Ack packet at each receiving communications terminal.

Moreover, while the embodiment as described above includes an assumption that the transmission of the concatenated packet is an unencrypted transmission, it is possible to apply an encrypted transmission to the communications terminal in the present embodiment.

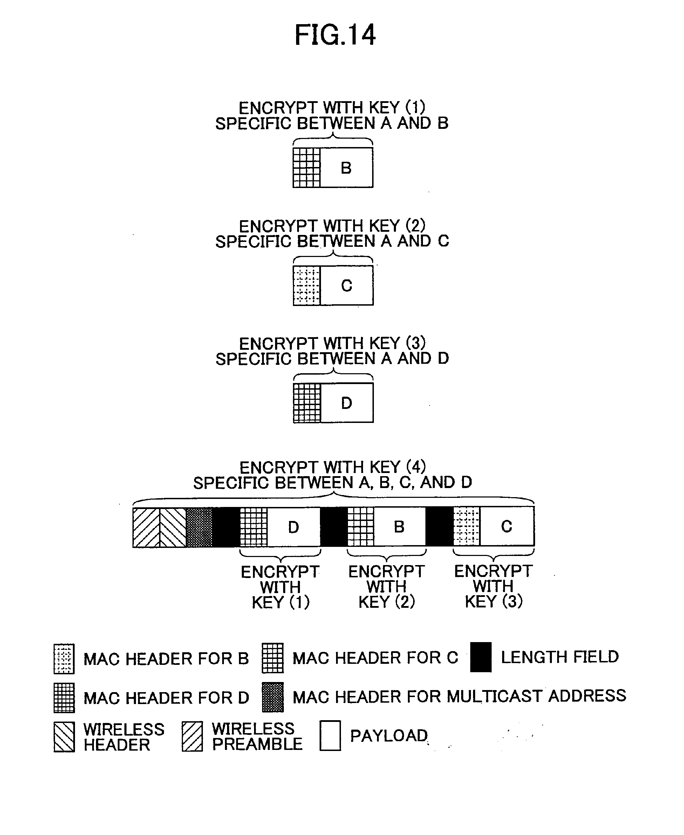

FIG. 14 is a diagram which describes an encrypted transmission of a concatenated packet. As illustrated in FIG. 14, each of the individual packets addressed to the communications terminal B2, to the communications terminal C3, and to the communications terminal D4, are encrypted with differing encryption keys. In other words, for packet encryption, the packet addressed to the communications terminal B2 uses an encryption key specific between the communications terminal A1 and the communications terminal B2, the packet addressed to the communications terminal C3 uses an encryption key specific between the communications terminal A1 and the communications terminal C3, and the packet addressed to the communications terminal D4 uses an encryption key specific between the communications terminal A1 and the communications terminal D4 (referring to FIG. 14 (1) through (3)).

Moreover, for concatenated packet encryption, the packet having encapsulated the concatenated packet uses an encryption key which is the same for all communications terminals sharing the same multicast address (referring to FIG. 14 (4)).

Thus, according to the present embodiment, realizing a secure concatenated-packet transmission is enabled by encrypting a concatenated packet so as to be transmitted.

The present application is based on Japanese Priority Patent Application No. 2003-206607 filed August 7, 2003, with the Japanese Patent Office, the entire contents of which are hereby incorporated by reference.

## Claims

1. A wireless packet communication apparatus in a wireless packet communication system in which a plurality of the wireless packet communication apparatuses share a wireless channel for packet communication, comprising:
a detection unit configured to detect within a transmission buffer at least two packets to be concatenated having different destination addresses; and
a concatenated-packet transmission control unit configured to concatenate the detected packets so as to multicast-transmit the concatenated packet to the corresponding destination addresses of said detected packets.

2. The wireless packet communication apparatus as claimed in claim 1,
wherein said detection unit further comprises:
a packet-length detection unit configured to detect packet length of the packets within the transmission buffer; and
a concatenation-determination unit configured to perform comparison of said detected packet length with a preset packet length so as to determine the packets to be concatenated based on the comparison.

3. The wireless packet communication apparatus as claimed in claim 2, further comprising:
a wireless-transmission rate detection unit configured to detect from the corresponding destination addresses of the packets within said transmission buffer wireless transmission rates of the packets;
wherein said concatenation-determination unit determines the packets to be concatenated based on the packet length comparison and the detected wireless transmission rates of the packets.

4. The wireless packet communication apparatus as claimed in claim 3,
wherein said concatenated-packet transmission control unit further comprises:
a packet-concatenation unit configured to concatenate the packets determined to be concatenated by the concatenation-determination unit so as to encapsulate a packet addressed to a multicast address into the concatenated packet.

5. The wireless packet communication apparatus as claimed in claim 4,
wherein said concatenated-packet transmission control unit further comprises:
a multicast-address setting unit configured to set the multicast address as the destination address of the concatenated packet.

6. The wireless packet communication apparatus as claimed in claim 5,
wherein said concatenated-packet transmission control unit further comprises:
a database configured to correlate and manage the destination addresses and the wireless transmission rates of the packets.

7. The wireless packet communication apparatus as claimed in claim 6,
wherein said concatenated-packet transmission control unit further comprises:
a packet-counting unit configured to measure total number of the packets within the transmission buffer;
wherein when the measured total number of the packets exceeds a predetermined number, the concatenated packet is encapsulated with the packet addressed to the multicast address so as to be transmitted.

8. The wireless packet communication apparatus as claimed in claim 7,
wherein said concatenated-packet transmission control unit further comprises:
a timer configured to measure corresponding waiting time periods of the packets within the transmission buffer, and
when the measured waiting time periods elapse for a predetermined period, the concatenated packet is encapsulated with the packet addressed to the multicast address so as to be transmitted.

9. The wireless packet communication apparatus as claimed in claim 1, further comprising:
a concatenated-packet reception control unit configured to control reception of the concatenated packet transmitted from a transmitting wireless packet communication apparatus;
wherein said concatenated-packet reception control unit further includes:
a packet-dismantling unit configured to receive the concatenated packet so as to fetch a packet addressed to own station from the received concatenated packet; and
a reception-buffering unit configured to accumulate the packet addressed to the own station into a reception buffer.

10. The wireless packet communication apparatus as claimed in claim 9,
wherein said concatenated-packet reception control unit further comprises:
an Ack packet transmission timing control unit configured to detect transmission timing of an Ack packet from location of the packet addressed to the own station fetched from the packet-dismantling unit so as to transmit Ack to the transmitting wireless packet communication apparatus at the detected transmission timing.

11. The wireless packet communication apparatus as claimed in claim 1,
wherein said concatenated-packet transmission control unit further comprises:
a wireless-transmission rate detection unit configured to detect from the corresponding destination addresses of the packets in said transmission buffer the corresponding wireless transmission rates of the packets; and
a plurality of packet-concatenating units configured to concatenate said corresponding packets according to said detected corresponding wireless transmission rates.

12. The wireless packet communication apparatus as claimed in claim 11,
wherein said concatenated-packet transmission control unit switches among packet-concatenating units arranged in parallel according to number of the detected wireless transmission rates.

13. A method of wireless packet communication in a wireless packet communication system in which a plurality of wireless packet communication apparatuses share a wireless channel for packet communication, comprising the steps of:
detecting within a transmission buffer at least two packets to be concatenated having different destination addresses; and
concatenating the detected packets so as to multicast-transmit the concatenated packet to the destination addresses of said detected packets.
